# EUROPEAN PATENT APPLICATION

(11) **EP 2 804 335 A1**
(43) Date of publication of application: **19.11.2014**
(21) Application number: 13305620.0
(22) Date of filing: 16.05.2013
(51) Int. Cl.: H04B 10/572, G01K 7/02, H04J 14/02

(54) **Optical transmitter suppressing wavelength deviation at the beginning of operation**

(71) Applicant: ALCATEL LUCENT, 92100 Boulogne-Billancourt (FR)
(72) Inventor: Poehlmann, Wolfgang, 70435 Stuttgart (DE); Van Veen, Doutje, Murray Hill, NJ New Jersey 07974-0636 (US)
(74) Representative: Sciaux, Edmond

(57) **Abstract**

An optical transmitter comprising a semiconductor laser diode, and a feedback loop to control the temperature of the laser diode automatically, this feedback loop comprising:
- a heater for heating the laser diode,
- a temperature sensor to monitor the temperature of the laser diode,
- a processing unit that compares the monitored temperature with a reference and provide a driving current to the heater, based on the comparison, for stabilizing the temperature of the laser diode automatically, this reference determining the nominal wavelength of the laser diode,
- and a suppression unit to suppress a temperature deviation of the laser diode, at the beginning of operation, enabled by an external command (Tx_Disable), this suppression unit comprising a pulsed correction signal generator and an adder for superposing a pulsed correction signal (PCS) momentarily on the feedback loop.

The pulsed correction signal generator comprises a module generating a pulsed correction signal (PCS) the amplitude of which and the shape of which are functions of the laser diode temperature (MT= T_{A}, ... , T₀, ..., T_{B}) measured by the temperature sensor.

## Description

### BACKGROUND OF THE INVENTION

### Field of the invention

The present invention generally relates to an optical transmitter, and more particularly to an optical transmitter comprising a heater for wavelength tuning. Such an optical transmitter can be used in an optical transmission network using the wavelength division multiplexing (WDM) to increase transmission capacity by multiplexing a plurality of signal channels each having a specific wavelength different from each other. A WDM system generally comprises an optical transmitter for each signal channel. An optical transmitter generally comprises a laser diode.

For instance, the upstream transmitter of a passive optical network is typically a directly modulated distributed feedback laser. For a new generation passive optical network, the optical transmitters need to be wavelength tunable. The wavelength of a laser diode shows a strong dependence on its temperature. A temperature tuning can be performed either by a thermoelectric cooler (TEC) mounted under the laser, which can heat and cool; or in a cheaper way by a heater on the laser chip. In this way the desired wavelength tuning is performed by adjusting a current fed to the cooler or heater.

There are several causes of wavelength deviation:
1) Variation of the ambient temperature.
2) Self heating in the laser diode. The electric drive energy (laser current) for direct modulation is not completely converted into light, but due to limited efficiency, a portion remains that heat's up the laser parasitically:
   - For continuous operation, this means just a temperature offset, which is easily compensated by the temperature control circuit if a TEC is used, because it can be used as a cooler as necessary. This temperature offset cannot be compensated when a mere heater is used.
   - For burst mode operation, this self heating causes an increase of the laser wavelength from the start of the burst to the end. A TEC driven by a classical temperature control circuit cannot compensate this wavelength deviation instantaneously because the feedback loop is too slow. The result of the laser self heating is therefore a wavelength overshoot from the beginning of the burst to the time when the temperature control circuit can settle (typically some milliseconds).

A simple method to reduce the self heating would be a reduction of the operation laser current. This would lead to a reduction of the laser output power, what is not desired because it causes a link budget reduction.

The drawbacks of both wavelength deviations could be solved by using relatively broad optical filter pass bands. This has disadvantages: It implies a higher tuning range, a lower spectral efficiency and, in case of optical pre-amplification, a higher noise.

### Description of the prior art

The document EP 2 395 690 describes a method that only mitigates the problem of the wavelength deviation due to ambient temperature or continuous operation in an optical transmission line with several multiplexed transmission channels using different wavelengths. This known method enables to make wavelength multiplexing while using low cost distributed feedback lasers the wavelengths of which are allowed to float with ambient temperature:
A set of different wavelengths is assigned to each transmission channel. Each wavelength is assigned to one set of different wavelength only. The wavelengths of each set of wavelengths are spread over an area of wavelength commonly permitted to all sets of wavelengths. A set of optical filters is assigned to each optical receiver thanks to the use of a cyclic interleaved wavelength plan. This set of optical filters passes the wavelengths of one set of wavelengths. Each optical transmitter chooses a wavelength from the set of wavelengths assigned to it, and
this choice varies as a function of the wavelength deviation caused by ambient temperature and self heating due to continuous operation. When it is needed to tune an optical transmitter to a channel that corresponds to a lower tuning temperature, or when the ambient temperature goes up too much, the optical transmitter is tuned to the next cycle of the arrayed waveguide filter,
corresponding to a higher temperature. So there is no need of a cooling system.

However this known solution is unable to instantly suppress the wavelength deviation at the beginning of laser diode operation.

The document US 8.036.540 describes a method that can suppress:
- wavelength deviation due to a variation of ambient temperature,
- and wavelength deviation due to the beginning of operation.

However the suppression of wavelength deviation due to the beginning of operation, by this known method, implies a constant laser temperature, i. e. independent of the ambient temperature.

According to this document, an optical transmitter comprises:
- a semiconductor laser diode,
- a feedback loop to control the temperature of the laser diode automatically,
- and a unit to suppress a temperature deviation of the laser diode, at the beginning of operation, enabled by an external command, by superposing a pulsed correction signal momentarily on the feedback loop.

The feedback loop comprises:
- a TEC on which the laser diode is mounted,
- a temperature sensor to sense the temperature of the laser diode,
- a processing unit that compares the monitored temperature with a reference and provide a driving current to the TEC, based on the comparison, for stabilizing the temperature of the laser diode automatically, when the ambient temperature varies;
- and an adder for superposing a pulsed correction signal momentarily on the feedback loop.

Without the correction signal, the feedback loop could not efficiently compensate the temperature deviation of the laser diode due to the self-heating, at the beginning of operation, because the feedback loop is too slow. The superposed pulsed correction signal momentarily increases the current supplied to the TEC, with a pulse shape such that the cooling due to this pulsed correction signal compensates the temperature deviation of the laser diode due to the self-heating during the beginning of the operation of the laser diode.

In an exemplary embodiment, the unit for suppressing a temperature deviation at the beginning of operation comprises:
- an attenuator to attenuate a binary signal, a transition of which constitutes the external command signal, this attenuator setting the amplitude of the pulsed correction signal;
- and a differentiator for generating the pulsed correction signal.

The pulsed correction signal may be superposed either on the reference or the sensed temperature, or on the comparison result.

At the beginning of operation, an external command concurrently triggers providing a current to the laser diode and providing a pulsed correction current to the TEC in order to temporally lower the laser temperature to compensate the self-heating of the laser diode at the beginning of operation. Thus, the wavelength deviation at the start of the operation is compensated by momentarily enhancing the cooling capacity of the TEC by the pulsed current.

It is known that the wavelength tuning can be done by a mere heater instead of a TEC. However a heater cannot suppress the wavelength deviation of a laser diode when there is a big and quick increase of the ambient temperature, because it cannot quickly cool the laser diode.

A mere heater is simpler and less expensive than a TEC. So it is desirable to use a heater instead of a TEC. Then there are two problems to be solved: The wavelength deviation due to big and quick variations of ambient temperature, and the wavelength deviation due to the self heating at the beginning of operation. The first problem can solved by the method described in the document EP 2 395 690 mentioned above. But this method does not stabilize the laser diode temperature.

Unfortunately the second problem cannot be directly solved by the method described in the document US 8.036.540 because it implies a constant laser temperature, i. e. independent of the ambient temperature. If one would try to compensate the wavelength deviation at the beginning of operation by momentarily decreasing the heating capacity of the heater, by reducing (or even canceling) the driving current of the heater, the compensation efficiency would much vary with the laser temperature, because the wavelength deviation is dependent of the laser diode temperature.

Thus, there is a need to provide a technical solution for suppressing the wavelength deviation at the beginning of operation when a mere heater is used for tuning a laser diode.

This problem is solved by the optical transmitter according to the invention.

### SUMMARY OF THE INVENTION

The object of the invention is an optical transmitter optical transmitter comprising a semiconductor laser diode, and a feedback loop to control the temperature of the laser diode automatically, this feedback loop comprising:
- a heater for heating the laser diode,
- a temperature sensor to monitor the temperature of the laser diode,
- a processing unit that compares the monitored temperature with a reference and provide a driving current to the heater, based on the comparison, for stabilizing the temperature of the laser diode automatically, this reference determining the nominal wavelength of the laser diode,
- and a suppression unit to suppress a temperature deviation of the laser diode, at the beginning of operation, enabled by an external command), this suppression unit comprising a pulsed correction signal generator and an adder for superposing a pulsed correction signal momentarily on the feedback loop;
**characterized in that** the pulsed correction signal generator comprises a module generating a pulsed correction signal the amplitude of which and the shape of which are functions of the laser diode temperature measured by the temperature sensor.

Thanks to the unit generating a pulsed correction signal the amplitude of which is a function of the laser diode temperature measured by the temperature sensor, the pulsed correction signal is adjusted for exactly suppressing the wavelength deviation, at the beginning of operation, whatever the laser diode temperature is, i. e. whatever the ambient temperature is.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 shows time charts of a classical optical transmitter comprising a tuning heater, wherein there is not any correction of the wavelength deviation at the beginning of operation of a laser diode.
- Figure 2 is a block diagram of one embodiment of the optical transmitter according to the invention.
- Figure 3 is a block diagram of a part of this embodiment.
- Figure 4 shows time charts illustrating a correction of the wavelength deviation at the beginning of operation of a laser diode, in this embodiment.

### DETAILED DESCRIPTION OF THE PREFERRED EMBODIMENTS

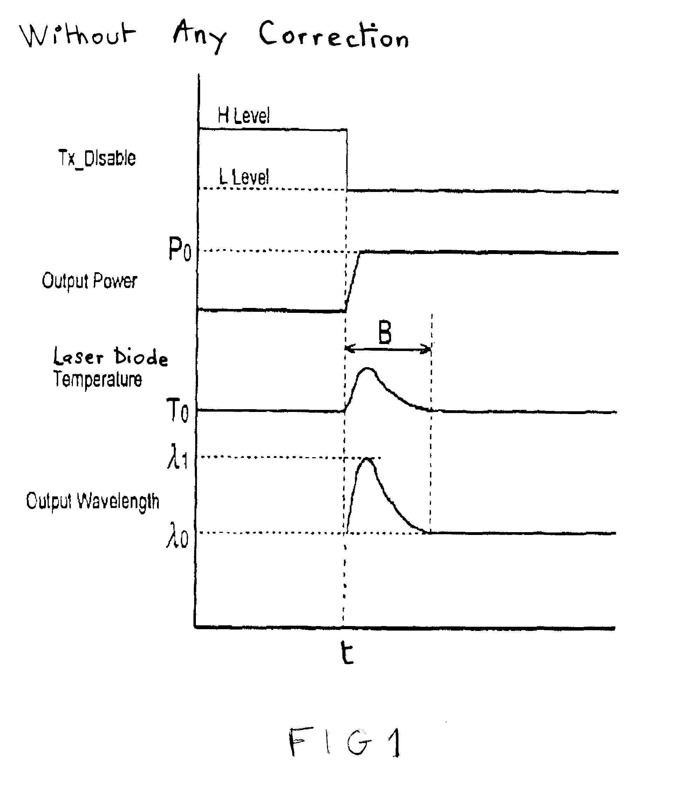

**Figure 1** shows time charts of a classical optical transmitter comprising a tuning heater, wherein there is not any correction of the wavelength deviation at the beginning of operation of a laser diode. A processing unit, receiving the output of a thermistor, controls the heater driving current so as to set the temperature of the laser diode to be equal to a nominal value T₀ that corresponds to a nominal output wavelength λ₀.

The optical transmitter receives a disable signal Tx_Disable. At instant t, a high level to low level transition of this signal triggers the operation of the laser diode. The output power of the laser diode sharply rises from zero to a constant nominal value P₀. Although the laser diode is practically modulated by a modulation current, Figure 1 illustrates the output power of the laser diode as a constant value P₀.

After this instant t, the temperature of the laser diode temporarily increases even though it was stable at the nominal temperature T₀ until the beginning of the operation. Subsequently, the thermistor detects that the laser diode temperature has increased. However, there is substantial delay from the increase of the temperature to the return at a stable state at the target value T₀ because the feedback loop is slow. Accordingly, the output wavelength of the laser diode momentarily deviates from the pre-set value λ₀ to a peak value λ₁. The feedback loop causes the temperature to return to the nominal value T₀ after a time interval B. So the wavelength returns to its nominal value λ₀ after the time interval B.

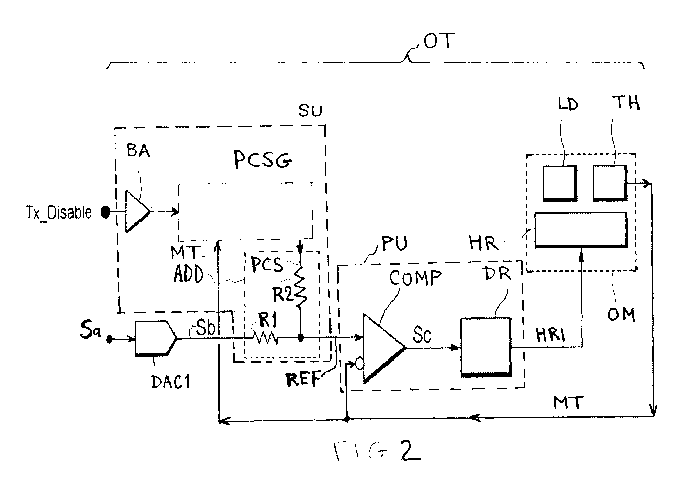

**Figure 2** is a block diagram of an embodiment OT of the optical transmitter according to the invention. This embodiment OT comprises:
- An optical module OM comprising:
   - a laser diode LD,
   - a thermistor TH that senses the temperature of the laser diode LD, and provides a voltage MT representing the monitored temperature of the laser diode LD.
   - a heater HR integrated to the chip of the laser diode LD, for heating the laser diode LD.
- A digital-to-analog converter DAC1 for converting a control digital value Sa to an analog reference voltage Sb corresponding to a nominal wavelength λ₀.
- A suppression unit SU to suppress a deviation of the temperature the laser diode LD, at the beginning of operation, for suppressing the wavelength deviation. This unit SU receives:
   - a analog reference voltage Sb corresponding to a nominal wavelength λ₀,
   - the voltage MT representing the monitored temperature of the laser diode LD,
   - and an external binary command Tx_Disable starting the operation of the laser diode LD, at the instant t.

This suppression unit SU supplies an analog corrected reference voltage REF that will be used as a reference for a feedback loop. This reference voltage REF is mainly determined by the value of the analog reference voltage Sb corresponding to a nominal wavelength λ₀. But it is corrected during a time interval B for suppressing the wavelength deviation due to self heating at the beginning of operation. It is corrected for momentarily decreasing the heating during the interval B; and this correction is made as a function of the monitored temperature MT because the potential wavelength deviation is a function of the laser diode temperature.
- A processing unit PU for supplying a current HRI to the heater HR, this processing unit PU comprising:
   - An analog comparator COMP that subtracts the voltage MT, representing the monitored temperature of the laser diode LD, from the corrected reference voltage REF supplied by the suppression unit SU; and provides an analog differential signal Sc.
   - A driving unit DR supplying the driving current HRI to the heater HR, based on the value of the analog differential signal Sc, so that an increase of the monitored temperature MT makes the current HRI decrease for decreasing the heating.

The suppression unit SU comprises:
- A buffer amplifier BA that receives the external binary command Tx_Disable starting the operation of the laser diode LD.
- A pulsed correction signal generator PCSG that receives the voltage MT representing the monitored temperature of the laser diode LD, and receives the command signal Tx_Disable forwarded by the buffer amplifier BA. At the beginning of the operation, it generates an analog pulsed correction signal PCS.
- An analog adder ADD comprising two resistors R1 and R2, for adding the analog pulsed correction signal PCS, supplied by the pulsed correction signal generator PCSG, to the analog voltage Sb corresponding to the nominal wavelength λ₀, supplied by the digital-to-analog converter DAC1. It supplies the corrected reference voltage REF to the comparator COMP.

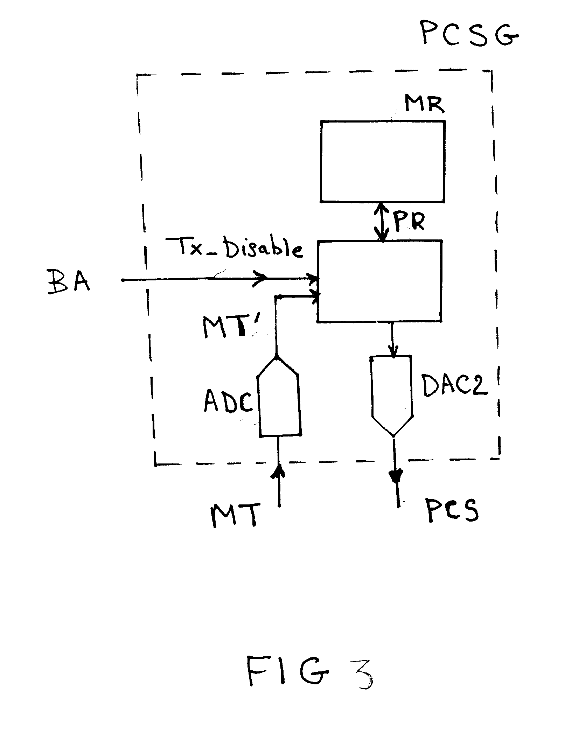

**Figure 3** represents an exemplary embodiment of the pulsed correction signal generator PCSG that comprises:
- An analog-to-digital converter ADC that receives the voltage MT representing the monitored temperature of the laser diode LD, and supplies a digital value MT'
- A memory MR storing a lookup table and a program to be run on a processor.
- A processor PR running this program for receiving the monitored temperature MT' and the command signal forwarded by the buffer amplifier BA at the beginning of the operation. The processor PR generates a series of values of the pulsed correction signal PCS by reading in the lookup table a set of values, chosen among a plurality of set of values, the set being chosen as a function of the current monitored temperature MT, i. e. T₀ in this example. - A digital-to-analog converter DAC2 converts the series of digital values of the signal PCS into an analogue signal PCS applied to the adder ADD.

The processor PR generates a pulsed correction signal PCS the amplitude of which and the shape of which are functions of the laser diode temperature MT= T_{A}, ... , T₀, ..., T_{B}, measured by the thermistor TH.

The lookup table can be constituted by experimentally adjusting each value of a series for compensating the wavelength deviation along a time interval B, at a given nominal temperature T₀, then re-iterating for different temperatures of the laser diode, in a range T_{A} to T_{B} for instance, on a given specimen of the laser diode LD. The resulting table can be used for other specimens of the same type of laser diode because there is a negligible dispersion of their characteristics.

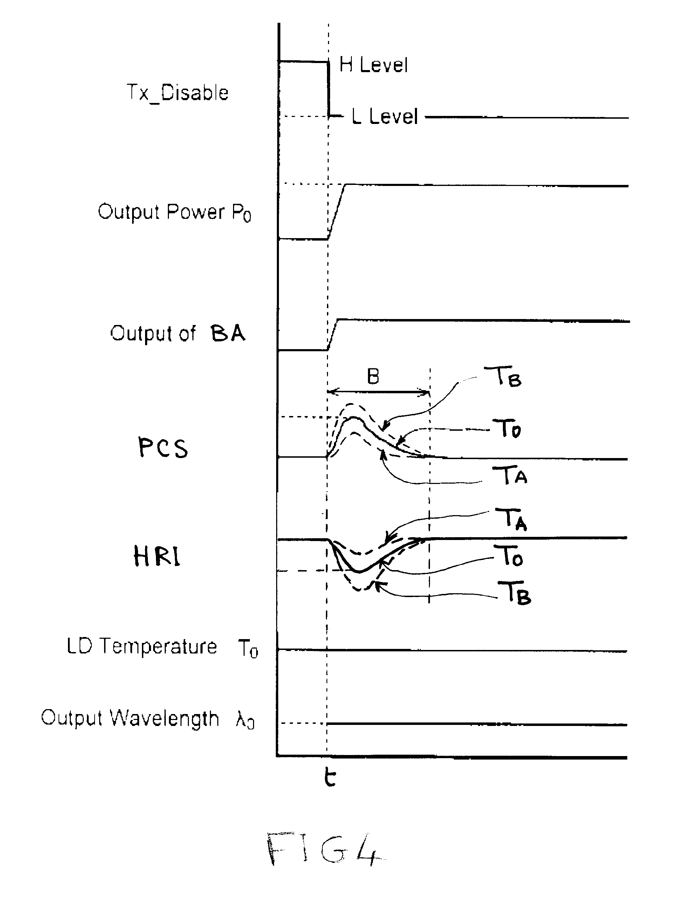

**Figure 4** shows time charts illustrating a correction of the wavelength deviation at the beginning of operation of the laser diode LD, in the embodiment represented on Figures 2 and 3, for the laser diode temperature range T_{A} to T_{B}. At instant t, the command Tx_Disable undergoes a high level to low level transition that starts the operation of the laser diode LD. Before the instant t, the processing unit PU, controls the heater driving current HRI so as to set the temperature of the laser diode to be equal to a target value T₀ in this example. So the nominal temperature of the laser diode is T₀, and corresponds to a nominal output wavelength λ₀.

After the instant t, the output power of the laser diode sharply raises from zero to a constant value P₀. Although the laser diode LD is actually modulated by a modulation current, Figure 4 illustrates the output power of the LD as a constant value P₀.

At instant t, the binary signal Tx_Disable is forwarded by the output of the buffer amplifier BA.

After the instant t, the temperature of the laser diode LD tends to increase even though it was stable at the nominal temperature T₀ until the beginning of operation. But the pulsed correction signal generator PCSG is instantly activated by receiving the binary signal Tx_Disable forwarded by the output of the buffer amplifier BA. The pulsed correction signal generator PCSG supplies a pulsed correction signal PCS, the shape of which and the amplitude of which corresponds to the monitored temperature MT supplied by the thermistor TH, just before the instant t, i. e. T₀ in this example. The amplitude of the pulsed correction signal PCS would be higher for a temperature equal to T_{B}, and would be lower for a temperature equal to T_{A} since T_{B} is higher than T_{A} in this example. Indeed, the laser diode temperature is not constant forever, it changes according to ambient temperature change and to tuning requirements, in the range T_{A} to T_{B}. Therefore the laser threshold current and slope efficiency changes, and thus the amplitude and width of the pulsed correction signal PCS is not constant, but is changed accordingly, e.g. by use of the lookup table stored in the memory MR.

The pulsed correction signal PCS is added to the reference voltage Sb, to correct it so that the processing unit PU momentarily reduces the intensity HRI supplied to the heater HR. This correction is strong at the beginning of the interval B. It finishes asymptotically at the end of the time interval B. After this time interval B, the correction is null because the feedback loop works again correctly for maintaining the monitored temperature at the nominal value T₀ defined by the reference voltage Sb.

Accordingly, the temperature inside the laser diode LD remains at the nominal value T₀, and thus the output wavelength of the laser diode LD does not deviate from its nominal value λ₀.

A variant of the pulsed correction compensation method consists in switching off and on the heater by short pulses. If the pulse width is small compared to the laser thermal time constant, the average heater power can be modified by modifying the duty cycle of the heater pulses.

In other embodiments, a pulsed correction signal may be superposed on the voltage MT representing the monitored temperature, or on the voltage Sc representing the result of the comparison between the monitored temperature and the reference voltage.

An another embodiment further comprises a current generator that applies a bias current to the laser diode LD when it is not in operation, in order to reduce the relative increase of self heating at the beginning of operation. In conventional burst mode transmitters, there is no bias current; i. e. the laser diode is completely switched off when no burst is sent out. The relative increase of self heating on the wavelength is proportional to the difference between the bias current out of operation and the current in operation. If the laser diode LD is not completely switched off before the beginning of operation, but receives a heating current below the laser threshold, the relative increase of self heating is reduced accordingly. Depending on the ratio between threshold current and modulation current, this reduction can be quite significant and so facilitates the suppression of the wavelength deviation by the above described apparatus.

By the biasing under the laser threshold, the laser emits a low power of light in a broad spectrum. The respective receiver at the optical line termination side contains already a filter to tune to the selected receiver signal. By this filter the small amount of light is further decreased. Therefore it can be easily assured that the sub-threshold light levels, even of the many optical network units in a passive optical network do not impact the performance of the optical line termination receivers.

## Claims

1. An optical transmitter (OT) comprising a semiconductor laser diode (LD), and a feedback loop to control the temperature of the laser diode automatically, this feedback loop comprising:
- a heater (HR) for heating the laser diode (LD),
- a temperature sensor (TH) to monitor the temperature of the laser diode,
- a processing unit (PU) that compares the monitored temperature (MT) with a reference (REF) and provide a driving current to the heater (HR), based on the comparison, for stabilizing the temperature of the laser diode automatically, this reference determining the nominal wavelength of the laser diode,
- and a suppression unit (SU) to suppress a temperature deviation of the laser diode, at the beginning of operation, enabled by an external command (Tx_Disable), this suppression unit comprising a pulsed correction signal generator (PCSG) and an adder (ADD) for superposing a pulsed correction signal (PCS) momentarily on the feedback loop;
**characterized in that** the pulsed correction signal generator (PCSG) comprises a module (PR, MR, ADC, DAC2) generating a pulsed correction signal (PCS) the amplitude of which and the shape of which are functions of the laser diode temperature (MT= T_{A}, ... , T₀, ..., T_{B}) measured by the temperature sensor (TH).

2. An optical transmitter (OT) according to claim 1, further comprising a current generator for applying a bias current to the laser diode when it is not in operation.
